# EUROPÄISCHE PATENTSCHRIFT

(11) **EP 2 226 516 B1**
(45) Veröffentlichungstag und Bekanntmachung des Hinweises auf die Patenterteilung: **16.05.2012**
(21) Anmeldenummer: 09003157.6
(22) Anmeldetag: 05.03.2009
(51) Int. Cl.: F16B 5/01, F16B 13/14

(54) **Klebermuffe mit einstückig gefertigtem Klebermuffengehäuse**
Adhesive socket with integral adhesive socket housing
Manchon de colle doté d'un boîtier de manchon de colle en une pièce

(43) Veröffentlichungstag der Anmeldung: 08.09.2010
(73) Patentinhaber: Häfele GmbH & Co KG, 72202 Nagold (DE)
(72) Erfinder: Kimmig, Clemens, 77728 Oppenau (DE); Walz, Rüdiger, 72149 Neustetten (DE); Lasch, Siegfried, 77866 Rheinau (DE)
(74) Vertreter: Kohler Schmid Möbus

(56) Entgegenhaltungen:
- DE-A1-102006 049 954
- DE-A1-102007 031 176
- FR-A- 2 321 822
- "Klebedübel Aerofix 100 25/4mm, Artikelnummer 039.70.254 - Abbildungen/Masszeichnungen", INTERNET CITATION, 1 January 2007 (2007-01-01), page 1, XP001556148, Retrieved from the Internet: URL:https://easylink.hafele.com/is-bin/INT ERSHOP.enfinity/WFS/HNL-EasyLin k_HNL-Site/nl_NL/-/EUR/Haefele_ViewOfferDe tail-StartSavePageable [retrieved on 2009-09-22]

## Beschreibung

Die vorliegende Erfindung betrifft sowohl ein Klebermuffengehäuse einer Klebermuffe zum Einkleben in eine Bohrung einer Möbelplatte oder dgl., mit einem hülsenförmigen Gehäuseunterteil zur Aufnahme einer Klebstoffpatrone, mit einem Gehäuseoberteil, das einen Kopfabschnitt und einen in die obere Hülsenöffnung des Gehäuseunterteils einführbaren Stempelabschnitt aufweist, und mit einer Verschlusskappe zum Verschließen der unteren Hülsenöffnung des Gehäuseunterteils, als auch eine Klebermuffe mit einem solchen Klebermuffengehäuse und einer darin aufgenommenen Klebstoffpatrone.

Eine Klebermuffe mit einem derartigen Klebermuffengehäuse ist beispielsweise aus dem HÄFELE e@sy link Online Katalog der Anmelderin (www.haefele.com) unter der Bezeichnung Klebedübel "AEROFIX 100" bekannt geworden.

Diese Klebermuffe "AEROFIX 100" dient zum Einkleben in die Bohrung einer Leichtbauplatte und überbrückt mechanisch und chemisch den Zwischenraum zwischen den beiden Decklagen der Leichtbauplatte. Die Klebermuffe "AEROFIX 100" umfasst ein Klebermuffengehäuse und eine darin eingesetzte Klebstoffpatrone. Das Klebermuffengehäuse besteht aus drei Spritzgussteilen, nämlich einem stempelförmigen Gehäuseoberteil, einem hülsenförmigen Gehäuseunterteil und einer Verschlusskappe, die zu dem Klebermuffengehäuse montiert werden. Die Klebermuffe "AEROFIX 100" wird zunächst mit ihrem Gehäuseunterteil in eine Bohrung in der oberen Decklage der Leichtbauplatte eingesetzt, und dann wird das Gehäuseoberteil in das Gehäuseunterteil eingepresst, wodurch die Klebstoffpatrone geöffnet wird und das Klebermuffengehäuse durch den austretenden Klebstoff mit der Leichtbauplatte verklebt wird.

Aufgabe der vorliegenden Erfindung ist es demgegenüber, bei einem Klebermuffengehäuse der eingangs genannten Art die Herstellungskosten zu verringern und die Montage zu vereinfachen.

Diese Aufgabe wird erfindungsgemäß dadurch gelöst, dass das Gehäuseoberteil über einen oder mehrere Sollbruchstege und die Verschlusskappe über mindestens ein Filmscharnier mit dem Gehäuseunterteil einstückig miteinander verbunden sind.

Erfindungsgemäß ist, wenn man beispielsweise das Klebermuffengehäuse im Spritzgussverfahren herstellt, nur noch ein einziges Spritzwerkzeug erforderlich. Im Falle mehrerer Sollbruchstege können diese in Winkelabständen zwischen Gehäuseoberteil und Gehäuseunterteil vorgesehen sein, während im Falle eines einzigen Sollbruchsteges dieser ringförmig zwischen Gehäuseoberteil und Gehäuseunterteil ausgebildet sein kann. Vorzugsweise sind der bzw. die Sollbruchstege zwischen dem Stempelabschnitt und dem oberen Hülsenende des Gehäuseunterteils gebildet. Die Verschlusskappe ist mittels des Filmscharniers an dem Gehäuseunterteil schwenkbar gelagert und dient zum Verschließen der unteren Hülsenöffnung.

Vorzugsweise ist die Verschlusskappe in ihrer die untere Hülsenöffnung des Gehäuseunterteils verschließenden Position fixierbar, beispielsweise indem die Verschlusskappe mit einem Rastvorsprung in eine entsprechende Rastaufnahme des Gehäuseunterteils eingreift oder umgekehrt.

Bei einer besonders bevorzugten Ausführungsform ist die Verschlusskappe durch zwei zum Verschließen der unteren Hülsenöffnung miteinander verbindbare, insbesondere miteinander verrastbare Verschlusskappenhälften gebildet, die jeweils über ein Filmscharnier in einem Arbeitsgang mit dem Gehäuseunterteil zusammenhängend gefertigt sind. Für eine Rastverbindung zwischen den beiden Verschlusskappenhälften weist vorzugsweise die eine Verschlusskappenhälfte einen Rastvorsprung und die andere Verschlusskappenhälfte eine Rastaufnahme zur Aufnahme des Rastvorsprungs auf.

Zum Öffnen einer in das Klebermuffengehäuse eingesetzten Klebstoffpatrone weist bevorzugt der Stempelabschnitt an seiner in das Innere des hülsenförmigen Gehäuseunterteils weisenden Unterseite mindestens einen innenseitigen Schneidvorsprung auf, der jeweils mit innenseitigen Gegenvorsprüngen an der Verschlusskappe zusammenwirken kann. Die Verschlusskappe, insbesondere jede Verschlusskappenhälfte, kann innenseitig auch noch einen Absatz als Auflage für die eingesetzte Klebstoffpatrone aufweisen.

Bei einer besonders bevorzugten Ausführungsform weist das Gehäuseunterteil an seinem oberen Hülsenende endseitig offene Längsschlitze zur Ausbildung von Spreizlaschen auf, die durch einen am Stempelabschnitt vorgesehenen Konus gegenüber dem übrigen Gehäuseunterteil aufgespreizt werden können. Vorteilhaft können der bzw. die Sollbruchstege zwischen dem Stempelabschnitt und den Spreizlaschen vorgesehen sein.

Die Erfindung betrifft auch eine einbaubereite Klebermuffe mit einem wie oben ausgebildeten Klebermuffengehäuse und mit einer im hülsenförmigen Gehäuseunterteil angeordneten Klebstoffpatrone, wobei die untere Hülsenöffnung des Gehäuseunterteils durch die Verschlusskappe verschlossen ist.

Die Erfindung betrifft schließlich auch ein Verfahren zum Einkleben der wie oben ausgebildete Klebermuffe in eine Bohrung einer Möbelplatte oder dgl., wobei die Klebermuffe mit ihrem Gehäuseunterteil in die Bohrung eingesetzt wird und dann das Gehäuseoberteil unter Durchtrennen des bzw. der Sollbruchstege und unter Öffnen der Klebstoffpatrone in das Gehäuseunterteil eingepresst wird und wobei das Klebermuffengehäuse durch den aus der Klebstoffpatrone ausgetretenen Klebstoff mit der Möbelplatte verklebt wird.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigt:
- Fign. 1 a, 1 b: die erfindungsgemäße einbaubereite Klebermuffe mit eingesetzter Klebstoffpatrone und mit geschlossener Verschlussklappe in perspektivischer Ansicht (Fig. 1 a) und in einer Seitenansicht (Fig. 1 b);
- Fign. 2a-2c: das einstückige Klebermuffengehäuse der in Fig. 1 gezeigten Klebermuffe mit geöffneter Verschlussklappe in perspektivischer Ansicht (Fig. 2a), in einer Seitenansicht (Fig. 2b) und in einem Längsteilschnitt (Fig. 2c); und
- Fign. 3a-3e: den zeitlichen Ablauf beim Einbau der in Fig. 1 gezeigten Klebermuffe in die Bohrung einer geschnitten dargestellten Möbelplatte.

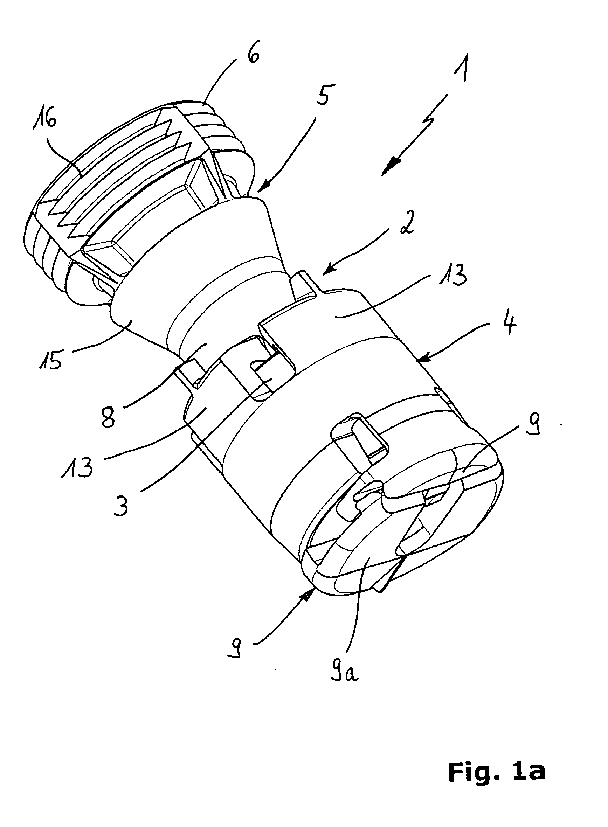

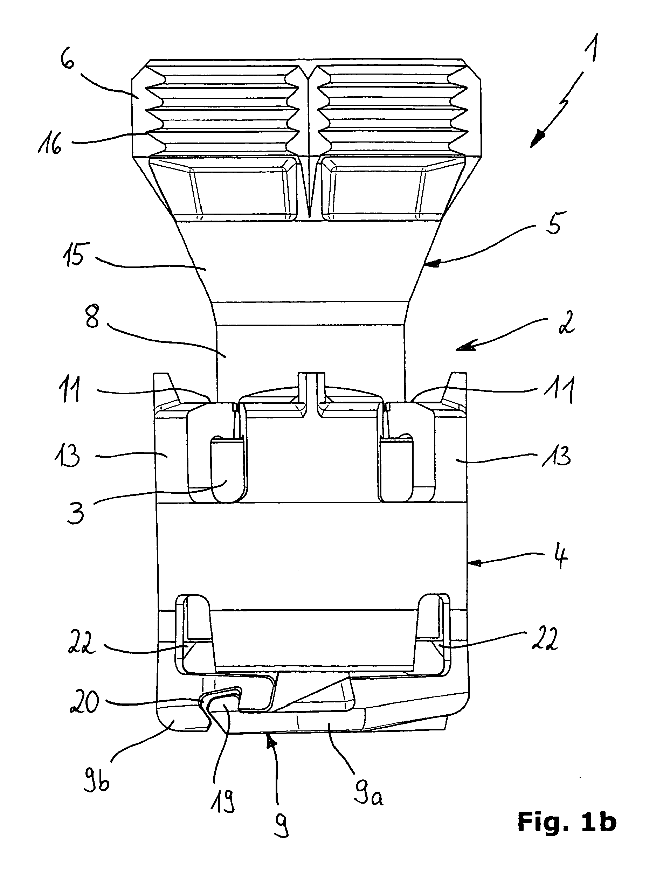

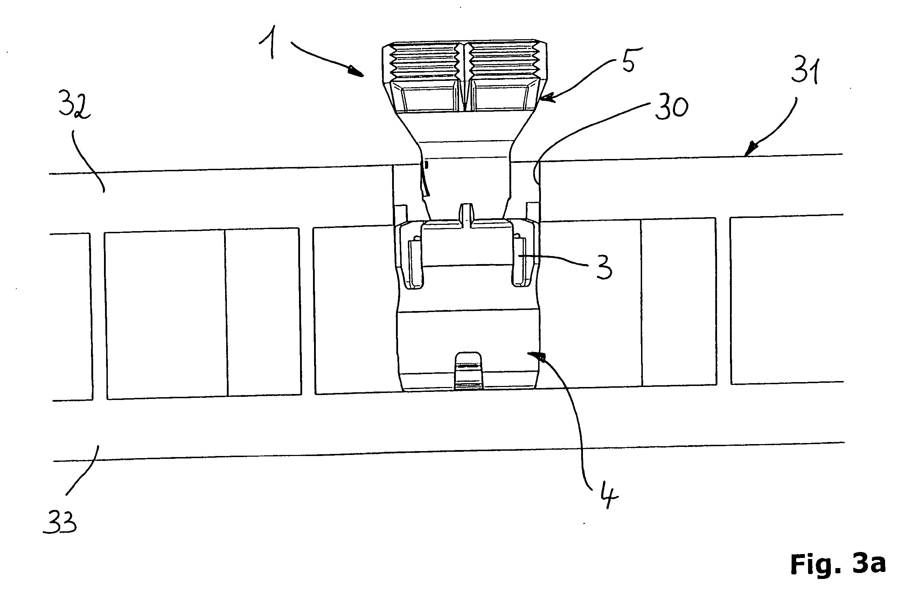

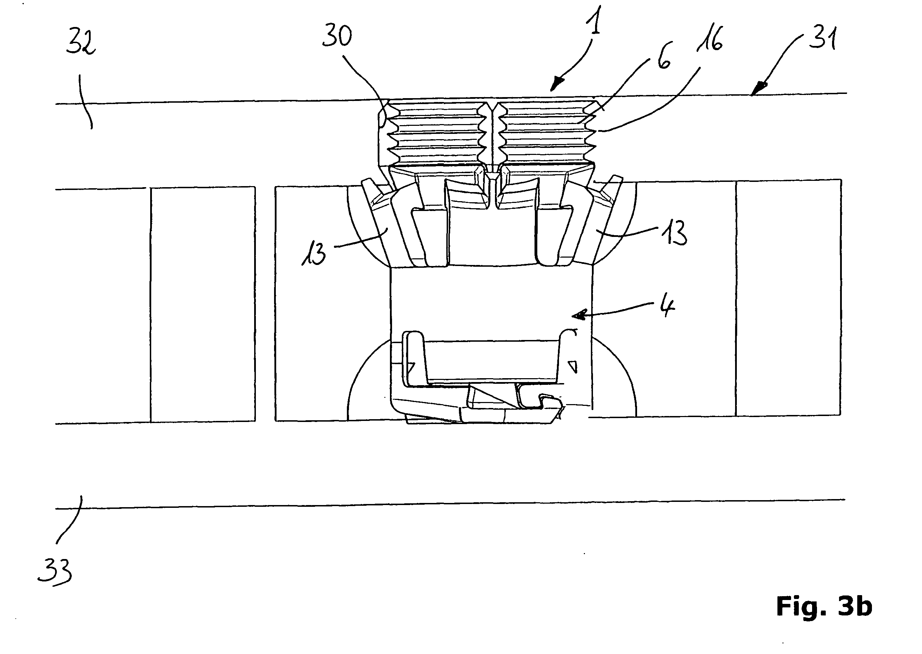

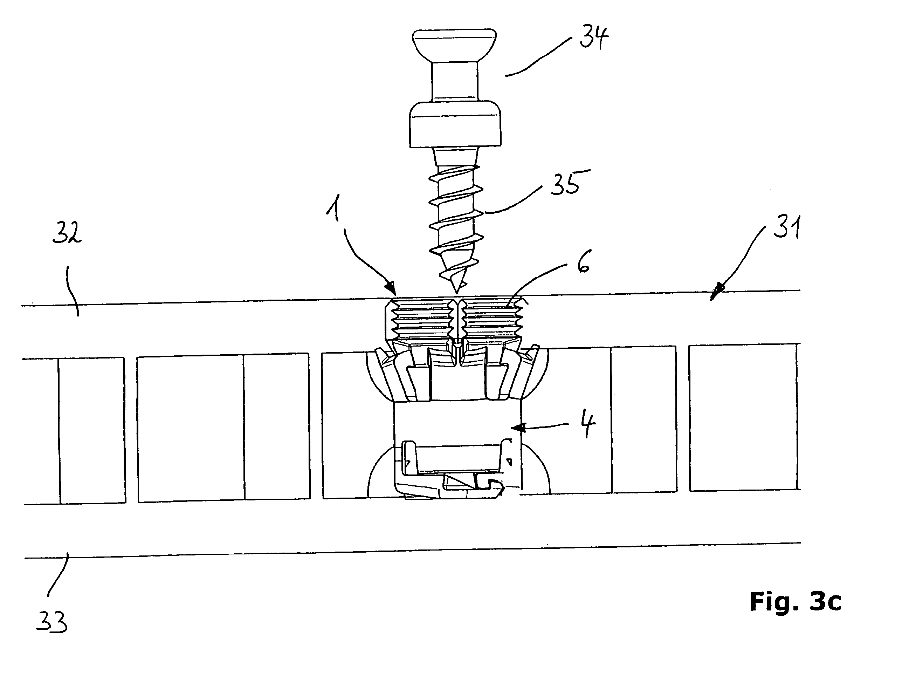

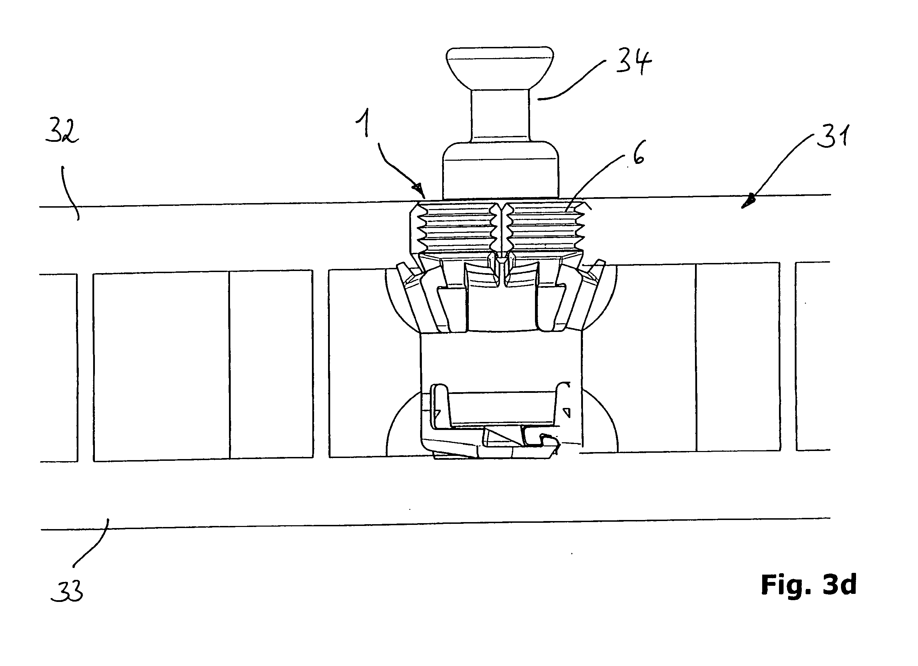

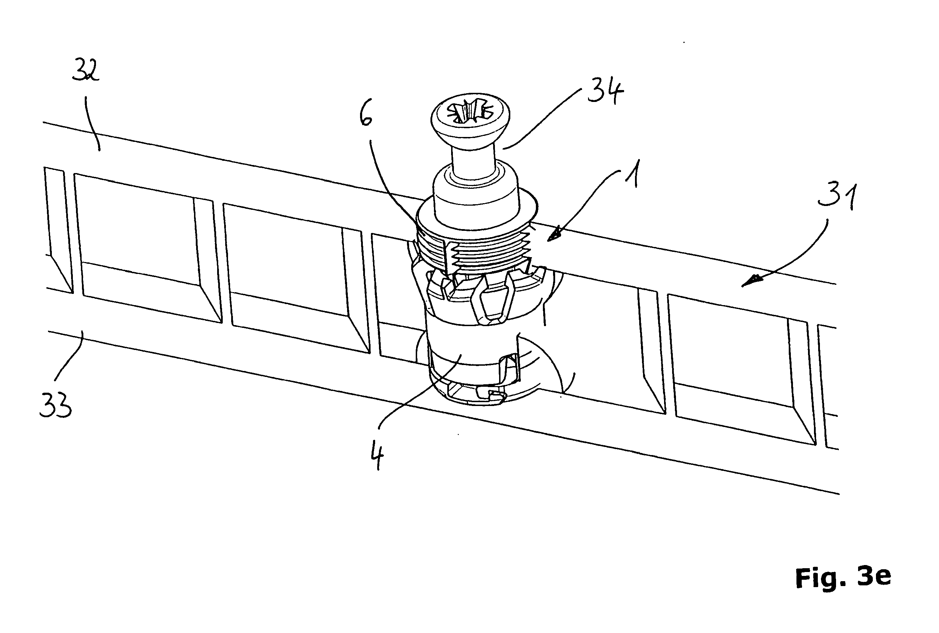

Die in Fign. 1a und 1b im einbaubereiten Zustand gezeigte Klebermuffe 1 dient zum Einkleben in eine Bohrung 30 einer Leichtbauplatte 31 (Fig. 3) und besteht aus einem Kunststoff-Klebermuffengehäuse **2** und einer darin eingesetzten Klebstoffpatrone **3.**

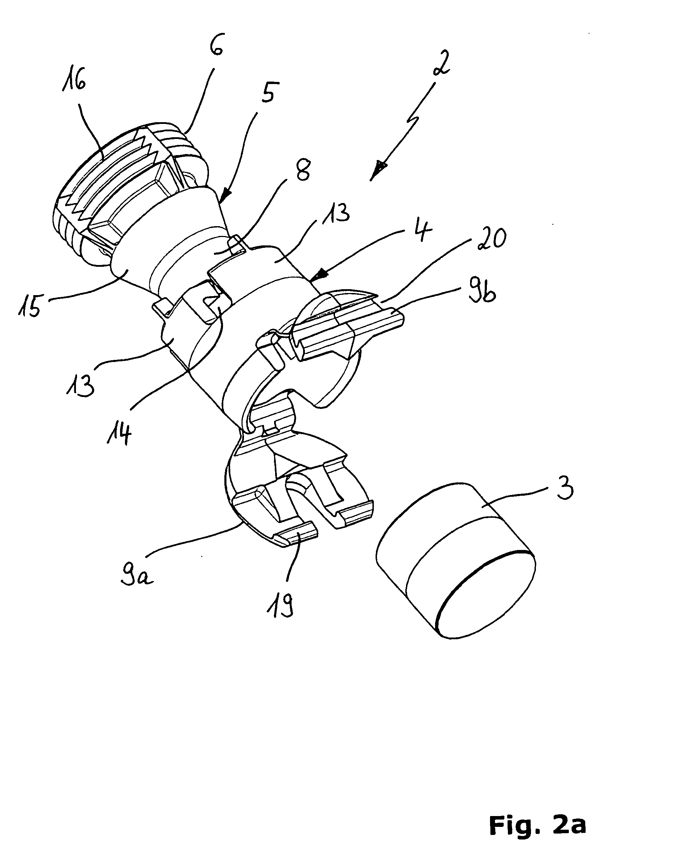

Wie in **Fign. 2a bis 2c** gezeigt, umfasst das Klebermuffengehäuse 2 ein hülsenförmiges Gehäuseunterteil **4** zur Aufnahme der Klebstoffpatrone 3, ein Gehäuseoberteil **5,** das einen zylinderförmigen Kopfabschnitt **6** und einen in die obere Hülsenöffnung **7** des Gehäuseunterteils 4 einführbaren Stempelabschnitt **8** aufweist, und eine zweiteilige Verschlusskappe **9** mit zwei einander gegenüberliegenden Verschlusskappenhälften **9a, 9b** zum Verschließen der unteren Hülsenöffnung **10** des Gehäuseunterteils 4. Das Gehäuseoberteil 5 ist über mehrere Sollbruchstege **11** und die beiden Verschlusskappenhälfte 9a, 9b über jeweils ein Filmscharnier **12** in einem Arbeitsgang mit dem Gehäuseunterteil 4 zusammenhängend gefertigt, also einstückig ausgebildet.

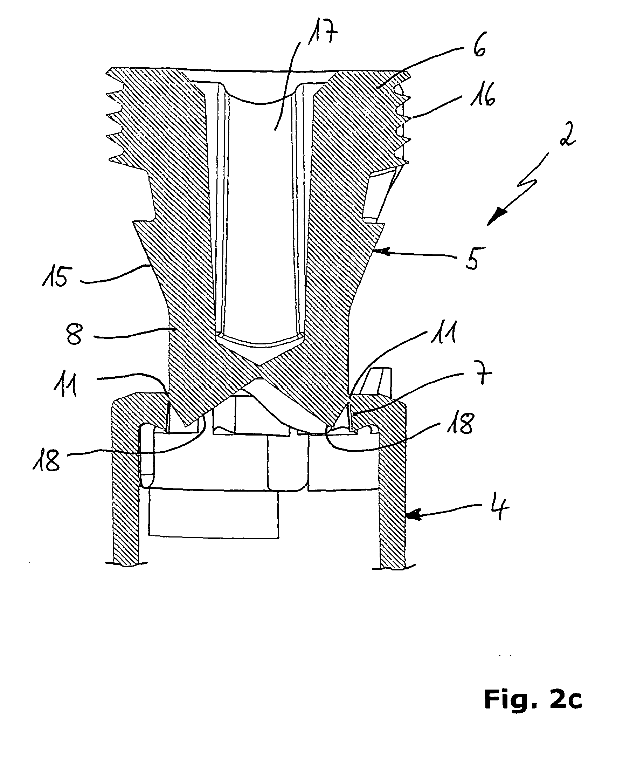

Das obere Hülsenende des Gehäuseunterteils **4** weist in Umfangsrichtung mehrere Spreizlaschen **13** auf, die jeweils durch nach oben offene Längsschlitze **14** voneinander getrennt sind. Die Sollbruchstege 11 sind jeweils zwischen dem unteren Ende des Stempelabschnitts 8 und den Spreizlaschen 13 vorgesehen. An seinem Übergang zum Kopfabschnitt 6 weist der Stempelabschnitt 8 einen sich in Richtung auf das untere Hülsenende 10 verjüngenden Konus **15** auf, um die Spreizlaschen 13 beim Einsetzen der Klebermuffe 1 in die Bohrung 30 aufzuspreizen. Der Kopfabschnitt 6, dessen Außendurchmesser größer als der des hülsenförmigen Gehäuseunterteils 4 ist, weist mantelseitig mehrere ringsum umlaufende Ringrippen **16** auf, die radial nach außen jeweils spitz zulaufen. Außerdem weist der Kopfabschnitt 6 eine zentrale Bohrung **17** zur Aufnahme einer Schraube, eines Bolzens oder dgl. auf. Wie in Fig. 2c gezeigt, sind an der in das Innere des hülsenförmigen Gehäuseunterteils 4 weisenden Unterseite des Stempelabschnitts 8 zwei Schneidvorsprünge **18** angeformt.

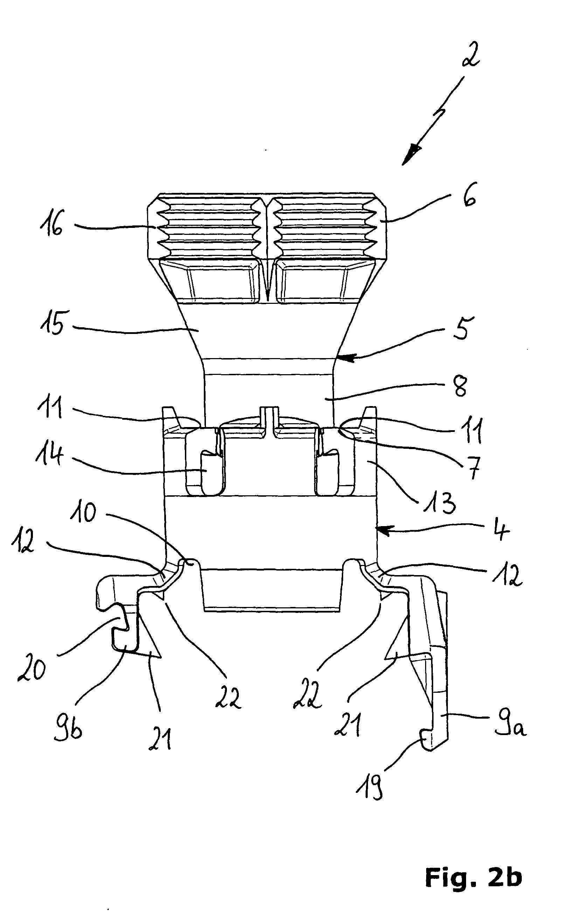

Die beiden Verschlusskappenhälften 9a, 9b sind mittels der Filmscharniere 12 an dem Gehäuseunterteil 4 schwenkbar gelagert, wobei an der einen Verschlusskappenhälfte 9a ein Rastvorsprung **19** und an der anderen Verschlusskappenhälfte 9b eine Rastaufnahme **20** zur Aufnahme des Rastvorsprungs 19 vorgesehen sind. Wie in Fig. 2b gezeigt, sind an den Innenseiten der beiden Verschlusskappenhälften 9a, 9b jeweils ein Schneidvorsprung **21** sowie ein Absatz **22** angeformt. Im gezeigten Ausführungsbeispiel bilden die Schneidvorsprünge 21 jeweils eine mit den Schneidvorsprüngen 18 des Stempelabschnitts 8 zusammenwirkende Gegenschneide.

Bei geöffneten Verschlussklappenhälften 9a, 9b wird die Klebstoffpatrone 3 in das hülsenförmige Gehäuseunterteil 4 eingeschoben, und dann werden die beiden Verschlusskappenhälften 9a, 9b aufeinander zu geschwenkt, bis die Verschlusskappenhälfte 9a mit ihrem Rastvorsprung 19 in die Rastaufnahme 20 der Verschlusskappenhälfte 9b einrastet und dadurch die untere Hülsenöffnung 10 des Gehäuseunterteils 4 verschlossen ist. In diesem einbaubereiten Zustand der Klebermuffe 1 liegt die Klebstoffpatrone 3, wie in Fig. 1b gezeigt ist, auf den Absätzen 22 der Verschlusskappenhälften 9a, 9b auf.

Fig. 3 zeigt den Einbau der Klebermuffe 1 in eine Bohrung 30 einer Leichtbauplatte **31.** Die Klebermuffe 1 wird mit ihrem Gehäuseunterteil 4 in die Bohrung 30 in der oberen Decklage **32** der Leichtbauplatte 31 eingesetzt, bis das untere Gehäuseunterteil **4** an der unteren Decklage **33** innenseitig anliegt (**Fig. 3a**). Dann wird das Gehäuseoberteil 5 in das Gehäuseunterteil **4** eingepresst, wodurch sowohl die Sollbruchstege 11 durchtrennt werden als auch der Stempelabschnitt 8 mit seinen Schneidvorsprüngen 18 und im Zusammenwirken mit den Schneidvorsprüngen 21 die Klebstoffpatrone 3 öffnet. Gleichzeitig werden durch den Konus 15 die Spreizlaschen 13 aufgespreizt, die die obere Decklage 31 in Einsetzrichtung hintergreifen und so die Klebermuffe 1 in der Leichtbauplatte 31 mechanisch fixieren bzw. verrasten. Der Kopfabschnitt 6 ist mit seinen Ringrippen 16 in die Bohrung 30 eingepresst und dadurch in der oberen Decklage 32 fixiert. Durch den aus der Klebstoffpatrone 3 ausgetretenen Klebstoff wird die Klebermuffe 1 zusätzlich mit den oberen und unteren Decklagen 32, 33 verklebt (**Fig. 3b**). Wie in **Fign. 3c** bis **3e** gezeigt, kann an der festgeklebten Klebermuffe 1 z.B. ein Verbindungsbolzen **34** befestigt werden, der mit einem Gewindeabschnitt **35** in die Bohrung 17 des Kopfabschnittes 6 eingeschraubt wird.

## Patentansprüche

1. Klebermuffengehäuse (2) einer Klebermuffe (1) zum Einkleben in eine Bohrung (30) einer Möbelplatte (31) oder dgl., mit einem hülsenförmigen Gehäuseunterteil (4) zur Aufnahme einer Klebstoffpatrone (3), mit einem Gehäuseoberteil (5), das einen Kopfabschnitt (6) und einen in die obere Hülsenöffnung (7) des Gehäuseunterteils (4) einführbaren Stempelabschnitt (8) aufweist, und mit einer Verschlusskappe (9; 9a, 9b) zum Verschließen der unteren Hülsenöffnung (10) des Gehäuseunterteils (4),
**dadurch gekennzeichnet,**
**dass** das Gehäuseoberteil (5) über einen oder mehrere Sollbruchstege (11) und die Verschlusskappe (9; 9a, 9b) über mindestens ein Filmscharnier (12) mit dem Gehäuseunterteil (4) einstückig miteinander verbunden sind.

2. Klebermuffengehäuse nach Anspruch 1, **dadurch gekennzeichnet, dass** der bzw. die Sollbruchstege (11) zwischen dem Stempelabschnitt (8) und dem oberen Hülsenende des Gehäuseunterteils (4) gebildet sind.

3. Klebermuffengehäuse nach Anspruch 1 oder 2, **dadurch gekennzeichnet, dass** die Verschlusskappe (9; 9a, 9b) in ihrer die untere Hülsenöffnung (10) des Gehäuseunterteils (4) verschließenden Position fixierbar, insbesondere verrastbar ist.

4. Klebermuffengehäuse nach einem der vorhergehenden Ansprüche, **dadurch gekennzeichnet, dass** die Verschlusskappe (9) durch zwei zum Verschließen der unteren Hülsenöffnung (10) miteinander verbindbare, insbesondere miteinander verrastbare Verschlusskappenhälften (9a, 9b) gebildet ist, die jeweils über ein Filmscharnier (12) in einem Arbeitsgang mit dem Gehäuseunterteil (4) zusammenhängend gefertigt sind.

5. Klebemluffengehäuse nach Anspruch 4, **dadurch gekennzeichnet, dass** die eine Verschlusskappenhälfte (9a) einen Rastvorsprung (18) und die andere Verschlusskappenhälfte (9b) eine Rastaufnahme (19) zur Aufnahme des Rastvorsprungs (18) aufweist.

6. Klebermuffengehäuse nach einem der vorhergehenden Ansprüche, **dadurch gekennzeichnet, dass** die Verschlusskappe (9), insbesondere jede Verschlusskappenhälfte (9a, 9b), innenseitig einen Absatz (21) als Auflage für die Klebstoffpatrone (3) aufweist.

7. Klebermuffengehäuse nach einem der vorhergehenden Ansprüche, **dadurch gekennzeichnet, dass** das Gehäuseunterteil (4) an seinem oberen Hülsenende endseitig offene Längsschlitze (14) zur Ausbildung von Spreizlaschen (13) aufweist, und dass der in die obere Hülsenöffnung (7) einführbare Stempelabschnitt (8) einen sich in Richtung auf das untere Hülsenende verjüngenden Konus (15) zum Aufspreizen der Spreizlaschen (13) aufweist.

8. Klebermuffengehäuse nach Anspruch 7, **dadurch gekennzeichnet, dass** der bzw. die Sollbruchstege (11) zwischen dem Stempelabschnitt (8) und den Spreizlaschen (3) vorgesehen sind.

9. Klebermuffengehäuse nach einem der vorhergehenden Ansprüche, **dadurch gekennzeichnet, dass** der Stempelabschnitt (8) an seiner in das Innere des hülsenförmigen Gehäuseunterteils (4) weisenden Unterseite mindestens einen Schneidvorsprung (17) aufweist.

10. Klebermuffengehäuse nach einem der vorhergehenden Ansprüche, **dadurch gekennzeichnet, dass** die Verschlusskappe (9), insbesondere jede Verschlusskappenhälfte (9a, 9b), mindestens einen Schneidvorsprung (20) aufweist.

11. Klebermuffe (1) mit einem Klebermuffengehäuse (2) nach einem der vorhergehenden Ansprüche und mit einer im hülsenförmigen Gehäuseunterteil (4) angeordneten Klebstoffpatrone (3), wobei die untere Hülsenöffnung (10) des Gehäuseunterteils (4) durch die Verschlusskappe (9; 9a, 9b) verschlossen ist.

12. Verfahren zum Einkleben einer Klebermuffe (1) nach Anspruch 11 in eine Bohrung (30) einer Möbelplatte (31) oder dgl., wobei die Klebermuffe (1) mit ihrem Gehäuseunterteil (4) in die Bohrung (30) eingesetzt wird und dann das Gehäuseoberteil (5) unter Durchtrennen des bzw. der Sollbruchstege (11) und unter Öffnen der Klebstoffpatrone (3) in das Gehäuseunterteil (4) eingepresst wird und wobei das Klebermuffengehäuse (2) durch den aus der Klebstoffpatrone (3) ausgetretenen Klebstoff mit der Möbelplatte (31) verklebt wird.

## Claims

1. Adhesive insert housing (2) of an adhesive insert (1) to be glued into a bore (30) of a furniture panel (31) or the like, comprising a sleeve-shaped lower housing part (4) for receiving an adhesive cartridge (3), an upper housing part (5) having a head section (6) and a stamp section (8) that can be inserted into the upper sleeve opening (7) of the lower housing part (4), and a sealing cap (9; 9a, 9b) for closing the lower sleeve opening (10) of the lower housing part (4),
**characterized in that**
the upper housing part (5) is integrally connected to the lower housing part (4) via one or more breaking webs (11) and the sealing cap (9; 9a, 9b) is integrally connected to the lower housing part (4) via at least one film hinge (12).

2. Adhesive insert housing according to claim 1, **characterized in that** the breaking web(s) (11) is/are formed between the stamp section (8) and the upper sleeve end of the lower housing part (4).

3. Adhesive insert housing according to claim 1 or 2, **characterized in that** the sealing cap (9; 9a, 9b) can be fixed, in particular locked, in its position in which it seals the lower sleeve opening (10) of the lower housing part (4).

4. Adhesive insert housing according to any one of the preceding claims, **characterized in that** the sealing cap (9) is formed by two sealing cap halves (9a, 9b), which can be connected, in particular locked, to each other for closing the lower sleeve opening (10), and are each integrally produced with the lower housing part (4) through a film hinge (12) in one work step.

5. Adhesive insert housing according to claim 4, **characterized in that** one sealing cap half (9a) has a locking projection (18) and the other sealing cap half (9b) has a catch (19) for receiving the locking projection (18).

6. Adhesive insert housing according to any one of the preceding claims, **characterized in that** the sealing cap (9), in particular each sealing cap half (9a, 9b), has a step (21) on the inner side as a support for the adhesive cartridge (3).

7. Adhesive insert housing according to any one of the preceding claims, **characterized in that** the upper sleeve of the lower housing part (4) comprises longitudinal slits (14) that are open at the ends for forming spreading lugs (13), and the stamp section (8) that can be inserted into the upper sleeve opening (7) has a cone (15) that tapers towards the lower sleeve end for spreading the spreading lugs (13).

8. Adhesive insert housing according to claim 7, **characterized in that** the breaking web(s) (11) is/are provided between the stamp section (8) and the spreading lugs (3).

9. Adhesive insert housing according to any one of the preceding claims, **characterized in that** the stamp section (8) has at least one cutting projection (17) on its lower side facing the inside of the sleeve-shaped lower housing part (4).

10. Adhesive insert housing according to any one of the preceding claims, **characterized in that** the sealing cap (9), in particular every sealing cap half (9a, 9b), has at least one cutting projection (20).

11. Adhesive insert (1) with an adhesive insert housing (2) according to any one of the preceding claims, and with an adhesive cartridge (3) arranged in the sleeve-shaped lower housing part (4), wherein the lower sleeve opening (10) of the lower housing part (4) is closed by the sealing cap (9; 9a, 9b).

12. Method for gluing an adhesive insert (1) according to claim 11 into a bore (30) of a furniture panel (31) or the like, wherein the lower housing part (4) of the adhesive insert (1) is inserted into the bore (30), and the upper housing part (5) is then forced into the lower housing part (4), thereby breaking the breaking web(s) (11) and opening the adhesive cartridge (3), and wherein the adhesive insert housing (2) is glued to the furniture panel (31) by the adhesive released from the adhesive cartridge (3).

## Revendications

1. Boîtier de manchon à coller (2) d'un manchon à coller (1) destiné à être collé dans un perçage (30) d'un panneau de meuble (31) ou analogue, avec une partie inférieure de boîtier (4) en forme de douille destinée à recevoir une cartouche de colle (3), avec une partie supérieure de boîtier (5) qui présente une portion de tête (6) et une portion de poinçon (8) pouvant être introduite dans l'ouverture supérieure de douille (7) de la partie inférieure de boîtier (4), et avec un bouchon de fermeture (9 ; 9a, 9b) pour fermer l'ouverture inférieure de douille (10) de la partie inférieure de boîtier (4), **caractérisé en ce que** la partie supérieure de boîtier (5), par l'intermédiaire d'une ou plusieurs nervures (11) destinées à la rupture, et le bouchon de fermeture (9 ; 9a, 9b), par l'intermédiaire d'au moins une charnière pelliculaire (12), sont assemblés d'un seul tenant à la partie inférieure de boîtier (4).

2. Boîtier de manchon à coller selon la revendication 1, **caractérisé en ce que** la ou les nervures (11) destinées à la rupture sont formées entre la portion de poinçon (8) et l'extrémité supérieure de douille de la partie inférieure de boîtier (4).

3. Boîtier de manchon à coller selon la revendication 1 ou 2, **caractérisé en ce que** le bouchon de fermeture (9 ; 9a, 9b) peut être immobilisé, en particulier par encliquetage, dans sa position fermant l'ouverture inférieure de douille (10) de la partie inférieure de boîtier (4).

4. Boîtier de manchon à coller selon l'une des revendications précédentes, **caractérisé en ce que** le bouchon de fermeture (9) est formé par deux moitiés de bouchon de fermeture (9a, 9b) pouvant être assemblées l'une à l'autre, en particulier par encliquetage, pour fermer l'ouverture inférieure de douille (10), les moitiés de bouchon de fermeture (9a, 9b) étant fabriquées en une seule opération solidarisées avec la partie inférieure de boîtier (4) par l'intermédiaire d'une charnière pelliculaire respective (12).

5. Boîtier de manchon à coller selon la revendication 4, **caractérisé en ce que** l'une (9a) des moitiés de bouchon de fermeture présente une saillie d'encliquetage (18), et l'autre moitié de bouchon de fermeture (9b) présente un logement d'encliquetage (19) destiné à recevoir la saillie d'encliquetage (18).

6. Boîtier de manchon à coller selon l'une des revendications précédentes, **caractérisé en ce que** le bouchon de fermeture (9), en particulier chaque moitié de bouchon de fermeture (9a, 9b), présente sur le côté intérieur un décrochement (21) comme appui pour la cartouche de colle (3).

7. Boîtier de manchon à coller selon l'une des revendications précédentes, **caractérisé en ce que** la partie inférieure de boîtier (4) présente à son extrémité supérieure de douille des fentes longitudinales (14) ouvertes à une extrémité, destinées à former des pattes écartables (13), et **en ce que** la portion de poinçon (8) pouvant être introduite dans l'ouverture supérieure de douille (7) présente un cône (15) allant en se rétrécissant en direction de l'extrémité intérieure de douille et destiné à écarter les pattes écartables (13).

8. Boîtier de manchon à coller selon la revendication 7, **caractérisé en ce que** la ou les nervures (11) destinées à la rupture sont prévues entre la portion de poinçon (8) et les pattes écartables (13).

9. Boîtier de manchon à coller selon l'une des revendications précédentes, **caractérisé en ce que** la portion de poinçon (8) présente, sur son côté inférieur tourné vers l'intérieur de la partie inférieure de boîtier (4) en forme de douille, au moins une saillie coupante (17).

10. Boîtier de manchon à coller selon l'une des revendications précédentes, **caractérisé en ce que** le bouchon de fermeture (9), en particulier chaque moitié de bouchon de fermeture (9a, 9b), présente au moins une saillie coupante (20).

11. Manchon à coller (1) avec un boîtier de manchon à coller (2) selon l'une des revendications précédentes et avec une cartouche de colle (3) disposée dans la partie inférieure de boîtier (4) en forme de douille, sachant que l'ouverture inférieure de douille (10) de la partie inférieure de boîtier (4) est fermée par le bouchon de fermeture (9 ; 9a, 9b).

12. Procédé pour coller un manchon à coller (1) selon la revendication 11 dans un perçage (30) d'un panneau de meuble (31) ou analogue, sachant que le manchon à coller (1) est inséré par sa partie inférieure de boîtier (4) dans le perçage (30) puis que la partie supérieure de boîtier (5) est, en sectionnant la ou les nervures (11) destinées à la rupture et en ouvrant la cartouche de colle (3), emmanchée dans la partie inférieure de boîtier (4), et sachant que le boîtier de manchon à coller (2) est assemblé par collage au panneau de meuble (31) par la colle sortant de la cartouche de colle (3).
